# EUROPÄISCHE PATENTANMELDUNG

(11) **EP 2 096 306 A1**
(43) Veröffentlichungstag der Anmeldung: **02.09.2009**
(21) Anmeldenummer: 08003446.5
(22) Anmeldetag: 26.02.2008
(51) Int. Cl.: F03G 7/04

(54) **Verfahren zur Nutzung von Erdwärme, insbesondere zur Stromerzeugung**

(71) Anmelder: INNOTEC Energie und Umwelt GmbH, 45128 Essen (DE)
(72) Erfinder: Bund, Karlheinz Dr., 45133 Essen (DE)
(74) Vertreter: Rohmann, Michael

(57) **Zusammenfassung**

Verfahren zur Nutzung von Erdwärme, insbesondere zur Stromerzeugung, wobei Erdwärme über zumindest eine Förderleitung aus einem unterirdischen Bereich abgefördert wird. Oberhalb des unterirdischen Bereiches ist zumindest bereichsweise eine flächige Wärmesperre mit der Maßgabe angeordnet, dass eine Wärmeabstrahlung bzw. Wärmeableitung aus dem unterhalb der Wärmesperre angeordneten Erdreich in Richtung der Erdoberfläche reduziert bzw. minimiert wird.

## Beschreibung

Die Erfindung betrifft ein Verfahren zur Nutzung von Erdwärme, insbesondere zur Stromerzeugung.

Verfahren zur Nutzung von Erdwärme zur Stromerzeugung sind aus der Praxis grundsätzlich bekannt. Zunächst werden zumindest zwei Bohrungen in das Erdreich eingebracht, wobei ein Wärmeträgermedium durch eine Austrittsöffnung der ersten Bohrung in das Erdreich eingebracht und das Erdreich durchdringend zu einer Abführungsöffnung einer zweiten Bohrung geführt wird. Durch die zweite Bohrung wird das erwärmte Wärmeträgermedium zurück zur Erdoberfläche gefördert. Es hat sich jedoch gezeigt, dass die geothermische Wärme nur über einen begrenzten Zeitraum zur Verfügung steht. Das Gestein bzw. Erdreich verfügt zwar über eine zufriedenstellende Wärmekapazität, allerdings wird die abtransportierte Wärmemenge nur sehr langsam durch Wärmekonduktion ersetzt. Dies hat zur Folge, dass nach dem Ausbeuten eines Wärmereservoirs eine Regeneration desselben praktisch nicht bzw. nur äußerst langsam erfolgt. Die aus der Praxis bekannten HDR-Anlagen (Hot-Dry-Rock-Anlagen), mit denen Wärmeenergie aus trockenen Gesteinen abtransportiert wird, können daher nur in einem begrenzten Zeitintervall genutzt werden.

Der Erfindung liegt daher das technische Problem zugrunde, ein Verfahren anzugeben, mit dem Wärmeenergie aus geothermalen Quellen abtransportierbar ist und mit dem die geothermalen Quellen möglichst langfristig nutzbar sind.

Zur Lösung dieses technischen Problems lehrt die Erfindung ein Verfahren zur Nutzung von Erdwärme, insbesondere zur Stromerzeugung, wobei Erdwärme über zumindest eine Förderleitung aus einem unterirdischen Bereich abgefördert wird, wobei oberhalb des unterirdischen Bereichs zumindest bereichsweise eine flächige Wärmesperre mit der Maßgabe angeordnet wird, dass eine Wärmeabstrahlung bzw. Wärmeableitung aus dem unterhalb der Wärmesperre angeordneten unterirdischen Bereich bzw. Erdreich in Richtung der Erdoberfläche reduziert bzw. minimiert wird. - Es liegt im Rahmen der Erfindung, dass die Wärmesperre unterirdisch bzw. unterhalb der Erdoberfläche vorgesehen wird.

Erdreich meint im Rahmen der Erfindung vor allem Gestein und insbesondere kristallines Gestein, wie beispielsweise Granit oder Gneis. Mit Erdreich sind aber auch hochpermeable Gesteinsschichten, sogenannte Aquifere gemeint. Der Begriff Erdreich umfasst im Rahmen der Erfindung fernerhin auch sogenannte Störungszonen. Dabei handelt es sich um Bruchzonen oder Bruchflächen, die in Sedimentgestein wie kristallinem Gestein auftreten können.

Eine besonders bevorzugte Ausführungsform des erfindungsgemäßen Verfahrens ist **dadurch gekennzeichnet, dass** ein Wärmeträgermedium durch zumindest eine Zuführungsleitung in den unterirdischen Bereich bzw. in das Erdreich eingeführt wird und aus zumindest einer Austrittsöffnung der Zuführungsleitung in das Erdreich austritt, wobei das Wärmeträgermedium von der Austrittsöffnung über einen Strömungsabstand s das Erdreich durchdringend zu zumindest einer Abführungsöffnung zumindest einer Förderleitung geführt wird und von der Förderleitung aus dem unterirdischen Bereich abgefördert wird, wobei oberhalb des unterirdischen Bereichs bzw. oberhalb des Strömungsbereichs zwischen der Austrittsöffnung und Abführungsöffnung zumindest bereichsweise die flächige Wärmesperre angeordnet wird.

Der Strömungsabstand s ist vorzugsweise der horizontale Abstand zwischen der Austrittsöffnung und der Abführungsöffnung bzw. zwischen der Austrittsöffnung und der Förderleitung. Strömungsbereich meint im Rahmen der Erfindung den Bereich des Erdreichs, in dem das Wärmeträgermedium von der Austrittsöffnung zu der Abführungsöffnung strömt. Strömungsrichtung meint im Rahmen der Erfindung die Richtung von der Austrittsöffnung zur Abführungsöffnung. Es hat sich bewährt, das Erdreich im Strömungsbereich künstlich aufzubrechen, um den Strömungswiderstand des Wärmeträgermediums zu reduzieren.

Es hat sich bewährt, als Wärmeträgermedium Wasser einzusetzen. Grundsätzlich kann aber jedes Fluid eingesetzt werden, das die für den Einsatz in der Geothermie erforderliche thermische und chemische Stabilität besitzt. Die Austrittsöffnung und die Abführungsöffnung für das Wärmeträgermedium sind zweckmäßigerweise in einer Tiefe von 1.500 m bis 7.000 m, vorzugsweise von 2.000 m bis 7.000 m und bevorzugt von 3.000 m bis 7.000 m angeordnet. Nach einer sehr bevorzugten Ausführungsform der Erfindung ist die Austrittsöffnung und/oder die Abführungsöffnung in einer Tiefe von 3.500 m bis 6.000 m vorgesehen.

Es empfiehlt sich, dass der Strömungsabstand s zumindest 200 m, vorzugsweise zumindest 300 m und bevorzugt zumindest 400 m beträgt. Zweckmäßigerweise beträgt der Strömungsabstand bis zu 800 m und empfohlenermaßen bis zu 600 m.

Es liegt im Rahmen der Erfindung, dass die Wärmesperre in das Erdreich eingebracht wird. Die Wärmesperre wird vorzugsweise in einer Tiefe in das Erdreich eingebracht, in der die Temperatur des Erdreichs 80°C bis 250°C, bevorzugt 120°C bis 240°C, sehr bevorzugt 150°C bis 230°C und besonders bevorzugt 160°C bis 220°C beträgt. Nach bevorzugter Ausführungsform der Erfindung wird die Wärmesperre mit der Maßgabe in das Erdreich eingebracht, dass sich durch Wärmestauung im Bereich unterhalb der Wärmesperre eine Temperatur von 130°C bis 280°C einstellt, vorzugsweise eine Temperatur von 140°C bis 260°C, bevorzugt von 150°C bis 230°C und besonders bevorzugt von 170°C bis 210°C einstellt. Bereich unterhalb der Wärmesperre meint dabei den Bereich von 0 bis 500 m, vorzugsweise von 1 bis 200 m und bevorzugt von 1 bis 100 m unterhalb der Wärmesperre. Das erfindungsgemäße Verfahren wird empfohlenermaßen mit der Maßgabe durchgeführt, dass das zur Erdoberfläche geförderte Wärmeträgermedium eine Temperatur von 140°C bis 200°C, zweckmäßigerweise von 150°C bis 190°C und bevorzugt von 160°C bis 180°C aufweist.

Gemäß einer empfohlenen Ausführungsform wird die Wärmesperre in einer Tiefe von 400 m bis 6.000 m, zweckmäßigerweise 1.500 m bis 5.500 m, vorzugsweise 3.000 m bis 5.000 m und bevorzugt 4.000 m bis 5.000 m in das Erdreich eingebracht.

Die Dicke d der Wärmesperre beträgt vorzugsweise 1 bis 20 m, bevorzugt 1 bis 15 m, sehr bevorzugt 1 bis 8 m. Dicke d der Wärmesperre meint im Rahmen der Erfindung die Ausdehnung der Wärmesperre in vertikaler Richtung bzw. in Richtung quer zur Erdoberfläche.

Zur Herstellung der Wärmesperre wird das Erdreich bevorzugt Erschütterungen ausgesetzt, wodurch Hohlräume bzw. Risse in dem Erdreich gebildet werden. In diese Hohlräume wird zweckmäßigerweise das Material der Wärmesperre verfüllt bzw. gepresst. Dazu wird bevorzugt zumindest eine vertikale bzw. im Wesentlichen vertikale Fragmentierungsbohrung in das Erdreich getrieben. Es hat sich bewährt, dass sich an die Fragmentierungsbohrung zumindest eine horizontale bzw. im Wesentlichen horizontale Sprengungsbohrung anschließt. Die Hohlraumbildung bzw. das Fragmentieren des Erdreichs erfolgt empfohlenermaßen durch das Zünden von Sprengladungen in der Fragmentierungsbohrung und/oder Sprengungsbohrung und/oder durch das Einpressen von Flüssigkeit unter hohem Druck (Hydraulic-Facturing-Verfahren) durch die Fragmentierungsbohrung und/oder Sprengungsbohrung. Eine Ausführungsform des Verfahrens ist **dadurch gekennzeichnet, dass** Lanzen in das Erdreich von der Oberfläche aus eingebracht werden, durch welche Lanzen das Material der Wärmesperre in das Erdreich gepresst wird.

Nach empfohlener Ausführungsvariante der Erfindung wird eine erfindungsgemäße Wärmesperre von einem in den Erdboden eingebrachten Schacht, insbesondere von einem vertikal in den Erdboden eingebrachten Schacht, mit Hilfe von Bohrungen und/oder Lanzen im Erdreich angeordnet. Dabei erfolgt das Einbringen der Wärmesperre bzw. des Materials der Wärmesperre zweckmäßigerweise vom Schachtboden aus. Der Schachtboden mag sich beispielsweise in einer Tiefe von 600 m bis 1.000 m befinden. Vorzugsweise handelt es sich bei dem Schacht um einen ohnehin vorhandenen Schacht, insbesondere um einen Bergwerks- bzw. Bergbauschacht.

Zweckmäßigerweise beträgt die Länge I der Wärmesperre in Strömungsrichtung zumindest 1/10 des Strömungsabstandes s, vorzugsweise zumindest 1/5 und bevorzugt zumindest 1/2 des Strömungsabstandes s. Es hat sich bewährt, dass die Wärmesperre bevorzugt vertikal oberhalb des Strömungsbereiches angeordnet ist. In einer weiteren Ausführungsform der Erfindung beträgt die Länge I der Wärmesperre zumindest 1 s, empfohlenermaßen zumindest 1,5 s. Beträgt die Länge I der Wärmesperre mehr als s, dann liegt der Strömungsbereich vorzugsweise vollständig bzw. im Wesentlichen vollständig vertikal unterhalb der Wärmesperre.

Es empfiehlt sich, dass die Breite b der Wärmesperre (quer zur Strömungsrichtung) zumindest 1/20 des Strömungsabstandes s beträgt, vorzugsweise zumindest 1/15 und bevorzugt zumindest 1/10 des Strömungsabstandes s beträgt. Eine Ausführungsform der Erfindung ist **dadurch gekennzeichnet, dass** die Breite b der Wärmesperre zumindest 1/4 s und bevorzugt zumindest 1/2 s beträgt. Die Breite b, die Länge I und die Dicke d definieren die Ausdehnung und das Volumen der Wärmesperre.

Eine Ausführungsform der Erfindung ist **dadurch gekennzeichnet, dass** an zumindest zwei Einpressstellen das Material der Wärmesperre in Hohlräume bzw. Risse des fragmentierten Erdreichs gepresst wird. Auf diese Weise werden bevorzugt zumindest zwei Untereinheiten ausgebildet, die zweckmäßigerweise die Wärmesperre bilden. Gemäß einer empfohlenen Ausführungsform der Erfindung wird eine Mehrzahl von Untereinheiten gebildet und zwar vorzugsweise zumindest drei, bevorzugt zumindest fünf Untereinheiten. Aufgrund der statistischen Hohlraum- bzw. Rissbildung weisen die Untereinheiten in der Regel über eine statistische dreidimensionale Geometrie auf. Es liegt im Rahmen der Erfindung, dass die Untereinheiten jeweils wolkenförmig ausgestaltet sind. Vorzugsweise sind die Untereinheiten in einer Ebene bzw. im Wesentlichen in einer Ebene angeordnet. Grundsätzlich ist die Dicke der Untereinheiten so groß bzw. ungefähr so groß wie die Dicke d der Wärmesperre.

Es empfiehlt sich, dass die Wärmesperre einen Flächendeckungsgrad von zumindest 20 % aufweist, vorzugsweise von zumindest 30 % und bevorzugt einen Flächendeckungsgrad von zumindest 40 % aufweist. Zur Bestimmung des Flächendeckungsgrades wird zunächst die von den Untereinheiten abgedeckte Fläche ermittelt. Diese abgedeckte Fläche entspricht der Fläche, die die Untereinheiten bei ihrer Projektion auf eine horizontale Ebene in dieser Ebene insgesamt abdecken. Als Bezugsfläche zur Bestimmung des Flächendeckungsgrades wird das Quadrat des Strömungsabstandes s herangezogen. Der Flächendeckungsgrad ergibt sich aus dem Quotienten aus der Abdeckfläche der Untereinheiten und der Bezugsfläche s².

Nach einer empfohlenen Ausführungsvariante ist eine Mehrzahl von Untereinheiten im Wesentlichen in einer ersten Ebene zumindest zum Teil jeweils mit Abstand zueinander angeordnet, und eine Mehrzahl von Untereinheiten ist im Wesentlichen in einer zweiten Ebene ebenfalls zumindest zum Teil jeweils mit Abstand zueinander angeordnet und die Untereinheiten der zweiten Ebene sind zumindest zum Teil versetzt zu den Untereinheiten der ersten Ebene angeordnet, so dass die Abstände bzw. Lücken in der ersten Ebene zumindest teilweise von den Untereinheiten der zweiten Ebene abgedeckt bzw. überdeckt werden. Es liegt im Rahmen der Erfindung, mehrere solcher Ebenen mit Untereinheiten übereinander anzuordnen, wobei vorzugsweise die Untereinheiten der jeweils benachbarten Ebenen zumindest zum Teil versetzt zueinander angeordnet sind, so dass die Abstände bzw. Lücken der benachbarten Ebene zumindest teilweise abgedeckt bzw. überdeckt werden.

Es liegt im Rahmen der Erfindung, dass die Wärmesperre zumindest größtenteils aus einem wärmeisolierenden bzw. wärmedämmenden Material besteht. Gemäß bevorzugter Ausführungsform weist das Material der Wärmesperre zumindest bereichsweise zumindest einen Kunststoff, vorzugsweise einen hochtemperaturbeständigen Kunststoff auf. Empfohlenermaßen besteht die Wärmesperre bzw. deren Untereinheiten zu mindestens 90 Gew.-%, bevorzugt zu mindestens 95 Gew.-% aus Kunststoff. Vorzugsweise besteht die Wärmesperre bzw. deren Untereinheiten vollständig bzw. im Wesentlichen aus Kunststoff. Das Material der Wärmesperre wird zweckmäßigerweise mit der Maßgabe ausgewählt, dass der Wärmeleitkoeffizient des Materials kleiner ist als der des die Wärmesperre umgebenden Erdreichs. Es empfiehlt sich, dass zumindest ein Kunststoff verwendet wird, der gegenüber Temperaturen von 80 °C bis 130 °C stabil bzw. langfristig stabil ist. Vorzugsweise wird dem Kunststoff zumindest ein Stabilisator zugegeben, der die Hitzestabilität des Kunststoffs erhöht.

In einer bevorzugten Ausführungsform wird als Kunststoff für die Wärmesperre ein aufschäumbarer Kunststoff eingesetzt. Vorzugsweise wird zumindest ein Kunststoff aus der Gruppe "Polyamid, Polyethersulfon, Polyethylenterephtalat, Polyimid, Polystyrol" für das Material der Wärmesperre ausgewählt.

Grundsätzlich kann im Rahmen der Erfindung aber jedes Material für die Wärmesperre eingesetzt werden, mit dem eine Wärmeabstrahlung bzw. Wärmeableitung aus dem unterhalb der Wärmesperre angeordneten Erdreich in Richtung der Erdoberfläche reduziert bzw. minimiert werden kann. So kann beispielsweise auch Beton als Material für die Wärmesperre bzw. als Material für die Untereinheiten der Wärmesperre eingesetzt werden.

Zweckmäßigerweise wird zumindest eine Abführungsöffnung einer Förderleitung auf einem tieferen Niveau angeordnet als die zugeordnete Austrittsöffnung einer Zuführungsleitung angeordnet. Die Tiefendifferenz Δt zwischen Austrittsöffnung und Abführungsöffnung beträgt dabei vorzugsweise zumindest 1/20 des Strömungsabstandes s, bevorzugt zumindest 1/15 und besonders bevorzugt zumindest 1/10 des Strömungsabstandes s.

Es hat sich bewährt, dass zumindest zwei Austrittsöffnungen in zumindest einer ersten linearen Reihe angeordnet werden und dass zumindest zwei Abführungsöffnungen in zumindest einer parallel oder im Wesentlichen parallel zu der ersten linearen Reihe angeordneten zweiten linearen Reihe angeordnet werden. Grundsätzlich können alle Austrittsöffnungen der ersten linearen Reihe an eine einzige Zuführungsleitung angeschlossen sein.

Es empfiehlt sich, dass der Abstand a der Austrittöffnungen und/oder Abführungsöffnungen innerhalb einer linearen Reihe 100 m bis 400 m, vorzugsweise 200 m bis 300 m und bevorzugt 250 m bzw. ungefähr 250 m beträgt. Das Wärmeträgermedium tritt vorzugsweise aus zumindest einer Austrittsöffnung der ersten linearen Reihe in das Erdreich ein. Es hat sich bewährt, dass das Wärmeträgermedium durch zumindest zwei und bevorzugt durch eine Mehrzahl von Austrittsöffnungen in das Erdreich eintritt. Das Wärmeträgermedium wird empfohlenermaßen durch zumindest eine Abführungsöffnung zu der Förderleitung gefördert. In einer weiteren Ausführungsform des Verfahrens wird das Wärmeträgermedium durch zumindest zwei und bevorzugt durch eine Mehrzahl von Abführungsöffnungen zu der Förderleitung gefördert. Insbesondere bei einem hohen Wärmebedarf an der Oberfläche empfiehlt es sich, das Wärmeträgermedium durch eine Mehrzahl von Austrittsöffnungen in das Erdreich einzuleiten und durch eine Mehrzahl von Abführungsöffnungen zu der Förderleitung zu fördern. Auf diese Weise wird der Abtransport einer großen Wärmemenge aus dem Strömungsbereich ermöglicht.

Eine bevorzugte Ausführungsform des Verfahrens ist **dadurch gekennzeichnet, dass** eine erste lineare Reihe mit Austrittöffnungen zwischen zwei zweiten linearen Reihen mit Abführungsöffnungen angeordnet wird. Dabei sind die drei genannten linearen Reihen zweckmäßigerweise parallel oder im Wesentlichen parallel zueinander angeordnet. Vorzugsweise haben die zweiten linearen Reihen von der ersten linearen Reihe den gleichen Strömungsabstand s.

Eine ganz besonders bevorzugte Ausführungsform der Erfindung ist **dadurch gekennzeichnet, dass** mit zumindest zwei Erdwärmenutzungseinheiten gearbeitet wird, die jeweils zumindest eine Zuführungsleitung mit zumindest einer Austrittsöffnung sowie jeweils zumindest eine Förderleitung mit zumindest einer Abführungsöffnung aufweisen, dass zumindest einem Teil der Erdwärmenutzungseinheiten jeweils eine erfindungsgemäße Wärmesperre zugeordnet ist und dass die Erdwärmenutzungseinheiten alternierend betrieben werden. Vorzugsweise sind dabei alle alternierend betriebenen Erdwärmenutzungseinheiten jeweils mit einer erfindungsgemäßen Wärmesperre ausgestattet. Dem alternierenden Betrieb der Erdwärmenutzungseinheiten in Kombination mit den erfindungsgemäßen Wärmesperren kommt im Rahmen der Erfindung ganz besondere Bedeutung zu. Diese Ausführungsform zeichnet sich durch einen hohen Wirkungsgrad aus.

Der Erfindung liegt die Erkenntnis zugrunde, dass mit dem erfindungsgemäßen Verfahren die geothermische Wärme in einem bestimmten Erdbodenabschnitt über einen relativ langen Zeitraum effektiv nutzbar ist. Dabei kommt der erfindungsgemäßen Wärmesperre eine besondere Bedeutung zu. Diese Wärmesperre verhindert, dass die im Erdkern entwickelte Wärme ungehindert zur Oberfläche geleitet und dort an die Atmosphäre abgestrahlt wird. Der Erfindung liegt insoweit die Erkenntnis zugrunde, dass mit einer erfindungsgemäßen Wärmesperre die Weiterleitung und Ableitung der vom Erdkern entwickelten Wärme auf überraschend einfache Weise gehemmt werden kann. Da ungewollte Wärmeverluste durch die Abstrahlung der Wärme an der Oberfläche vermindert werden, wird die Regenerationsfähigkeit der Wärmequelle überraschend effektiv verbessert. Fernerhin erlaubt die sehr bevorzugte alternierende Förderung des Wärmeträgermediums einen sehr effektiven, gleichmäßigen und großflächigen Wärmeabtransport.

Hervorzuheben ist, dass mit der erfindungsgemäßen Wärmesperre gegenüber bekannten geothermischen Verfahren ein wesentlich höherer Wirkungsgrad der Wärmeentnahme erzielt werden kann. Die aus einer bestimmten Tiefe abgeförderte bzw. an die Erdoberfläche geförderter Wärme weist im Vergleich zu den bekannten Verfahren ein deutlich höheres Temperaturniveau auf. Die Energieumwandlung, insbesondere die Erzeugung von elektrischer Energie, in einem Kraftwerk kann bei Zugrundelegung des erfindungsgemäßen Verfahrens mit überraschend hohem Wirkungsgrad erfolgen.

Nachfolgend wird die Erfindung anhand einer lediglich ein Ausführungsbeispiel darstellenden Zeichnung erläutert. Es zeigen schematisch:
- Fig. 1: einen perspektivischen Schnitt durch eine Vorrichtung zur Durchführung des erfindungsgemäßen Verfahrens und
- Fig. 2: eine Draufsicht auf eine Vorrichtung zur Durchführung des erfindungsgemäßen Verfahrens.

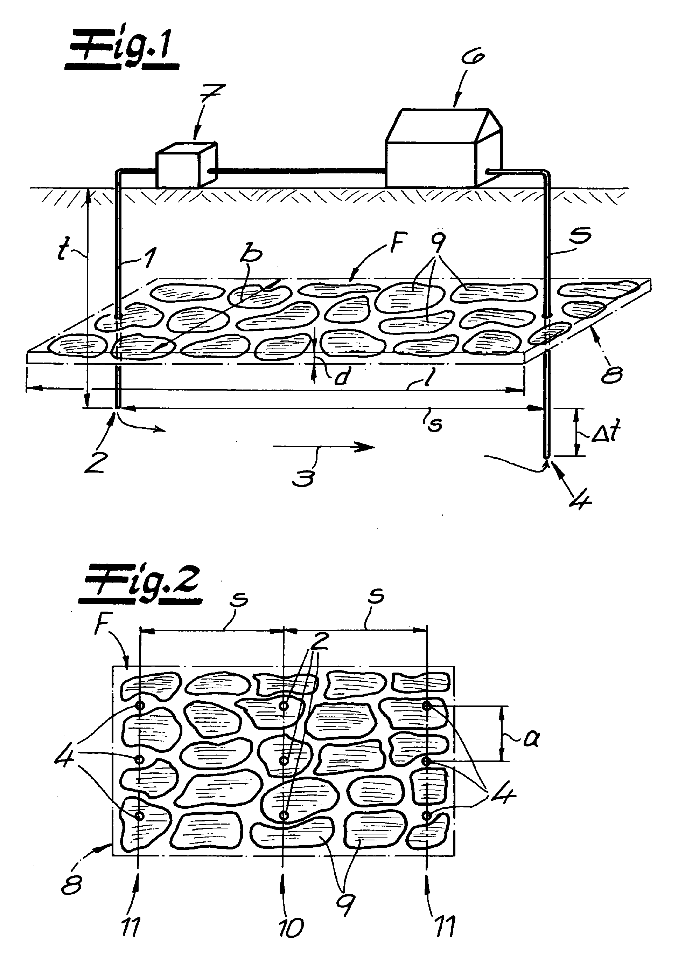

Die Figuren zeigen eine Vorrichtung zur Durchführung des erfindungsgemäßen Verfahrens zur Nutzung von Erdwärme, insbesondere zur Stromerzeugung. Ein nicht näher dargestelltes Wärmeträgermedium wird in Fig. 1 durch eine Zuführungsleitung 1 in das Erdreich eingeführt und tritt durch eine Austrittsöffnung 2 in das Erdreich ein. Im Ausführungsbeispiel liegt die Austrittsöffnung in einer Tiefe t von ungefähr 4.000 m. Bei dem Wärmeträgermedium handelt es sich vorzugsweise um Wasser. Das Wärmeträgermedium durchdringt im Ausführungsbeispiel nach Fig. 1 das Erdreich in Strömungsrichtung 3 zu einer Abführungsöffnung 4, wobei der Strömungsabstand s ungefähr 500 m beträgt. Das empfohlenermaßen unter hohem Druck stehende Wärmeträgermedium wird durch Kontakt mit dem Erdreich erwärmt und dabei bevorzugt verdampft. Durch die Abführungsöffnung 4 gelangt das erwärmte Wärmeträgermedium in die Förderleitung 5, durch welche das Wärmeträgermedium zweckmäßigerweise im gasförmigen Zustand an die Oberfläche gefördert wird. Es empfiehlt sich, dass in einer Energiegewinnungseinheit 6 elektrische Energie erzeugt wird, wobei das Wärmeträgermedium vorzugsweise abgekühlt und bevorzugt kondensiert wird. Das abgekühlte Wärmeträgermedium wird zweckmäßigerweise zu einer Pumpeinheit 7 geleitet, von wo aus es über die Zuführungsleitung 1 wieder in das Erdreich gepresst wird. Es hat sich bewährt, dass die Abführungsöffnung 4 um eine Differenz Δt tiefer als die Austrittsöffnung 2 angeordnet ist. Die Differenz Δt beträgt bei einem Strömungsabstand s von ungefähr 500 m bevorzugt zumindest 25 m.

In Fig. 1 ist strichpunktiert eine Wärmesperre 8 dargestellt, die im Ausführungsbeispiel in einer Tiefe von ungefähr 2.500 m angeordnet ist. Die Dicke d der Wärmesperre 8 beträgt vorzugsweise 3 bis 10 m. In den Figuren ist erkennbar, dass die Wärmesperre 8 von einer Mehrzahl von wolkenförmigen Untereinheiten 9 gebildet wird, die gemäß einer Ausführungsform und im Ausführungsbeispiel jeweils mit Abstand voneinander angeordnet sind. Die Länge I der Wärmesperre 8 in Strömungsrichtung ist vorzugsweise und im Ausführungsbeispiel größer als der Strömungsabstand s und beträgt im Ausführungsbeispiel 600 m. Vorzugsweise und im Ausführungsbeispiel ist der Strömungsbereich, den das Wärmeträgermedium zwischen der Austrittsöffnung 2 und der Abführungsöffnung 4 durchströmt, vollständig vertikal unterhalb der Wärmesperre 8 angeordnet. Die Zuführungsleitung 1 und die Förderleitung 5 durchdringen im Ausführungsbeispiel nach Fig. 1 die Wärmesperre 8, so dass die Austrittsöffnung 2 und die Abführungsöffnung 4 vertikal unterhalb der Wärmesperre 8 angeordnet sind.

In Fig. 1 ist der Übersichtlichkeit halber lediglich die Projektion der wolkenförmigen Untereinheiten 9 auf eine horizontale Fläche F durch die Wärmesperre 8 dargestellt. Der Flächendeckungsgrad der Wärmesperre 8 beträgt vorzugsweise und im Ausführungsbeispiel zumindest 50 %, empfohlenermaßen mehr als 50 %. Der Flächendeckungsgrad der Wärmesperre 8 beträgt in dem Ausführungsbeispiel in Fig. 1 ca. 60 %. In Fig. 2 ist erkennbar, dass vorzugsweise und im Ausführungsbeispiel eine erste lineare Reihe 10 von Austrittsöffnungen 2 vorgesehen ist und dass rechts und links von dieser ersten linearen Reihe 10 symmetrisch bzw. ungefähr symmetrisch zwei zweite lineare Reihen 11 von Abführungsöffnungen 4 angeordnet sind. Zweckmäßigerweise sind die in einer Reihe angeordneten Austrittsöffnungen 2 bzw. Abführungsöffnungen 4 jeweils an einer einzigen in Fig. 2 nicht dargestellten Zuführungsleitung 1 bzw. Förderleitung 5 angeschlossen. Bevorzugt sind alle drei linearen Reihen 10, 11 parallel oder im Wesentlichen parallel zueinander angeordnet. Symmetrisch meint im Rahmen des Ausführungsbeispiels nach Fig. 2, dass der Strömungsabstand s zwischen der ersten Reihe 10 und der rechten bzw. linken zweiten Reihe 11 gleich bzw. ungefähr gleich ist. Beispielsweise beträgt der Strömungsabstand s ungefähr 500 m. Demnach sind die zweiten Reihen 11 in dem Ausführungsbeispiel ungefähr 1.000 m voneinander entfernt angeordnet. Der Fig. 2 ist auch entnehmbar, dass in dem Ausführungsbeispiel die Austrittsöffnungen 2 bzw. die Abführungsöffnungen 4 in den linearen Reihen 10, 11 gleichmäßig verteilt sind und gleiche bzw. im Wesentlichen gleiche Abstände zueinander aufweisen. Der Abstand a zweier innerhalb einer Reihe 10, 11 nebeneinander angeordneter Austrittsöffnungen 2 bzw. Abführungsöffnungen 4 beträgt im Ausführungsbeispiel ungefähr 250 m.

Wie im Ausführungsbeispiel nach Fig. 1 ist auch im Ausführungsbeispiel gemäß Fig. 2 eine Wärmesperre 8 oberhalb des Strömungsbereichs angeordnet. Es hat sich bewährt, dass alle Austrittsöffnungen bzw. Abführungsöffnungen der ersten bzw. der zweiten Reihen vertikal unterhalb der Wärmesperre 8 angeordnet sind. Beispielsweise ist die Wärmesperre 8 in Fig. 2 ungefähr 1.200 m lang und ca. 600 m breit. In dem in Fig. 2 dargestellten Ausführungsbeispiel ist die Wärmesperre 8 etwa 10 m dick. Die Wärmesperre 8 wird auch hier von einer Vielzahl von Untereinheiten 9 gebildet. Der abgebildete Umriss der Untereinheiten 9 in Fig. 2 stellt die Projektion der Untereinheiten 9 auf die horizontale Ebene F der Wärmesperre 8 dar. Im Ausführungsbeispiel nach Fig. 2 beträgt der Flächendeckungsgrad (abgedeckte Fläche/s²) ungefähr 70 %.

Das Wärmeträgermedium wird beispielsweise mit Hilfe von zumindest einer in Fig. 2 nicht dargestellten Pumpe durch die ebenfalls in Fig. 2 nicht gezeigte Förderleitung 5 an die Erdoberfläche bzw. zu einer Energiegewinnungseinheit 6 gefördert. In dieser Energiegewinnungseinheit 6 wird die von dem Wärmeträgermedium beförderte Wärme (Erdwärme) in mechanische Energie umgewandelt. Dazu wird die Wärme vorzugsweise in einem Wärmetauscher zweckmäßigerweise auf eine organische Flüssigkeit übertragen, die einen niedrigeren Siedepunkt besitzt als Wasser. Dadurch wird die organische Flüssigkeit verdampft und der Dampf wird bei hoher Temperatur und hohem Druck bevorzugt über zumindest eine Turbine geleitet. Die Turbine treibt zweckmäßigerweise einen Generator an, mit dem die mechanische Energie in elektrische Energie umgewandelt wird. Das organische Medium wird bei diesem Vorgang abgekühlt, entspannt und anschließend zweckmäßigerweise wieder dem Wärmetauscher zugeführt, in dem es mit Hilfe des Wärmeträgermediums erwärmt wird. Das nach dem Wärmetauscher abgekühlte Wärmeträgermedium wird anschließend vorzugsweise wieder unter hohem Druck durch die Zuführungsleitung 1 und die Austrittsöffnungen 2 in das Erdreich verpresst.

## Patentansprüche

1. Verfahren zur Nutzung von Erdwärme, insbesondere zur Stromerzeugung, wobei Erdwärme über zumindest eine Förderleitung (5) aus einem unterirdischen Bereich abgefördert wird, wobei oberhalb des unterirdischen Bereiches zumindest bereichsweise eine flächige Wärmesperre (8) mit der Maßgabe angeordnet wird, dass eine Wärmeabstrahlung bzw. Wärmeableitung aus dem unterhalb der Wärmesperre (8) angeordneten Erdreich in Richtung der Erdoberfläche reduziert bzw. minimiert wird.

2. Verfahren nach Anspruch 1, wobei ein Wärmeträgermedium durch zumindest eine Zuführungsleitung (1) in den unterirdischen Bereich bzw. in das Erdreich eingeführt wird und aus zumindest einer Austrittsöffnung (2) der Zuführungsleitung (1) in das Erdreich austritt, wobei das Wärmeträgermedium von der Austrittsöffnung (2) über einen Strömungsabstand (s) das Erdreich durchdringend zu zumindest einer Abführungsöffnung (4) zumindest einer Förderleitung (5) geführt wird und von der Förderleitung (5) abgefördert wird, wobei oberhalb des Strömungsbereiches zwischen der Austrittsöffnung (2) und der Abführungsöffnung (4) zumindest bereichsweise die flächige Wärmesperre (8) angeordnet wird.

3. Verfahren nach Anspruch 2, wobei der Strömungsabstand s zumindest 200 m, vorzugsweise zumindest 300 m und bevorzugt zumindest 400 m beträgt.

4. Verfahren nach einem der Ansprüche 1 bis 3, wobei die Wärmesperre (8) in das Erdreich eingebracht wird.

5. Verfahren nach einem der Ansprüche 1 bis 4, wobei die Dicke d der Wärmesperre bis zu 50 m, vorzugsweise bis zu 40 m und bevorzugt bis zu 30 m beträgt.

6. Verfahren nach einem der Ansprüche 2 bis 5, wobei die Länge I der Wärmesperre (8) in Strömungsrichtung zumindest 1/10 des Strömungsabstandes s beträgt, vorzugsweise zumindest 1/5 und bevorzugt zumindest 1/2 des Strömungsabstandes s beträgt.

7. Verfahren nach einem der Ansprüche 2 bis 6, wobei die Breite b der Wärmesperre (8) zumindest 1/20 des Strömungsabstandes s beträgt, vorzugsweise zumindest 1/15 und bevorzugt zumindest 1/10 des Strömungsabstandes s beträgt.

8. Verfahren nach einem der Ansprüche 1 bis 7, wobei die Wärmesperre (8) einen Flächendeckungsgrad von zumindest 20 % aufweist, vorzugsweise von zumindest 30 % und bevorzugt eine Flächendeckungsgrad von zumindest 40 % aufweist.

9. Verfahren nach einem der Ansprüche 1 bis 8, wobei das Material der Wärmesperre (8) zumindest größtenteils aus einem Kunststoff, vorzugsweise aus einem hochtemperaturbeständigen Kunststoff besteht.

10. Verfahren nach Anspruch 9, wobei als Kunststoff ein aufschäumbarer Kunststoff eingesetzt wird.

11. Verfahren nach einem der Ansprüche 9 oder 10, wobei zumindest ein Kunststoff aus der Gruppe "Polyamid, Polyethersulfon, Polyethylenterephtalat, Polyimid, Polystyrol" für das Material der Wärmesperre (8) ausgewählt wird.

12. Verfahren nach einem der Ansprüche 1 bis 11, wobei für das Material der Wärmesperre (8) zumindest teilweise bzw. größtenteils ein anorganisches Material eingesetzt wird, insbesondere ein zementhaltiges Material.

13. Verfahren nach einem der Ansprüche 1 bis 12, wobei die Abführungsöffnung (4) auf einem tieferen Niveau als die Austrittsöffnung (2) angeordnet wird.

14. Verfahren nach einem der Ansprüche 1 bis 13, wobei zumindest zwei Austrittsöffnungen (2) in zumindest einer ersten linearen Reihe (10) angeordnet sind und wobei zumindest zwei Abführungsöffnungen (4) in zumindest einer parallel oder im Wesentlichen parallel zu der ersten linearen Reihe (10) angeordneten zweiten linearen Reihe (11) angeordnet werden.

15. Verfahren nach Anspruch 14, wobei eine erste lineare Reihe (10) mit Austrittsöffnungen (2) zwischen zwei zweiten linearen Reihen (11) mit Abführungsöffnungen (4) angeordnet wird.

16. Verfahren nach einem der Ansprüche 1 bis 15, wobei mit zumindest zwei Erdwärmenutzungseinheiten, vorzugsweise mit mehr als zwei Erdwärmenutzungseinheiten gearbeitet wird, die jeweils zumindest eine Austrittsöffnung und zumindest eine Abführungsöffnung aufweisen, die fernerhin zumindest zum Teil jeweils eine Wärmesperre aufweisen und wobei diese Mehrzahl von Erdwärmenutzungseinheiten alternierend betrieben wird.
